# EUROPÄISCHE PATENTSCHRIFT

(11) **EP 1 230 137 B1**
(45) Veröffentlichungstag und Bekanntmachung des Hinweises auf die Patenterteilung: **04.10.2006**
(21) Anmeldenummer: 00935122.2
(22) Anmeldetag: 26.05.2000
(51) Int. Cl.: B65G 1/06, B65G 13/07, B65G 47/54

(54) **KOMMISSIONIERLAGER FÜR STÜCKGÜTER**
PICKING STORE FOR PIECE GOODS
DISPOSITIF POUR RASSEMBLER ET PREPARER DES MARCHANDISES DE DETAIL

(30) Priorität: 17.11.1999 WO PCT/EP99/08823; 27.04.2000 DE 10020608
(43) Veröffentlichungstag der Anmeldung: 14.08.2002
(73) Patentinhaber: Dynamic Systems Engineering bv, 7005 BK Doetinchem (NL)
(72) Erfinder: HOLLANDER, Rudolf, NL-7251 KC Vorden (NL)
(74) Vertreter: Christophersen & Partner
(86) Internationale Anmeldenummer: PCT/EP2000/004801
(87) Internationale Veröffentlichungsnummer: WO 2001/036302

(56) Entgegenhaltungen:
- EP-A- 0 803 453
- CH-A- 432 366
- DE-U- 29 519 805
- US-A- 3 933 237
- US-A- 4 266 659
- US-A- 4 835 702
- US-A- 4 915 566

## Beschreibung

Die Erfindung betrifft ein Kommissionierlager für Stückgüter mit den im Oberbegriff des Patentanspruchs 1 angegebenen Merkmalen.

Die Kommissionierlagertechnik gewinnt in allen Bereichen des Handels und insbesondere auch im Lebensmittelgroßhandel an Bedeutung. Jedoch büßt die Lagertechnik im engeren Sinne, d.h. die statische Lagerung der einzelnen Stückgüter, eher an Bedeutung ein, wohingegen die dynamischen Prozesse und in erster Linie das Umschlagen der Güter an Bedeutung gewinnen. Ziel einer modernen Lagertechnik ist es daher, die Verweildauer der einzelnen Stückgüter in dem Lager und damit die mit der Einlagerung verbundene Kapitalbindung so gering wie möglich zu halten.

Die bekannten Kommissionierlager sind als mehrstöckige Regalkonstruktionen mit nebeneinander und übereinander angeordneten Lagergassen für die Stückgüter ausgebildet. Die Böden der Lagergassen sind mit Rollenbahnen aus frei drehbaren Rollen versehen und leicht geneigt, so daß die an dem einen Ende der Lagergassen, der sogenannten Beschickungs- oder Bestückungsseite, eingelagerten Waren entlang der Rollenbahnen zum anderen Ende der Lagergasse, der Entnahme- bzw. Kommissionierseite, laufen. Die Einlagerung der Stückgüter auf der Beschickungsseite erfolgt in der Regel von Hand, in dem die einzelnen Stückgüter von einer Palette entnommen und in die jeweils zugewiesene Lagergasse eingesetzt werden. Auch das Kommissionieren an der Entnahmeseite des Regals erfolgt oftmals noch von Hand.

Bekannt sind jedoch auch rechnergesteuert verfahrbare Entnahmevorrichtungen in Gestalt von Fördergeräten, die in einem auf der Kommissionierseite des Regals angeordneten Gang verfahrbar sind und entsprechend dem Kommissionierauftrag die in den einzelnen Lagergassen vorrätig gehaltenen Stückgüter übernehmen und zu einem Auftrag zusammenstellen. Die hierbei verwendeten Fördereinrichtungen sind über entsprechende Führungen in zwei Koordinaten verfahrbar, so daß von der Fördereinrichtung jede der übereinander und nebeneinander angeordneten Lagergassen einzeln angefahren werden kann.

Ein Kommissionierlager mit den Merkmalen des Oberbegriffs ist aus der US 4,915,566 bekannt. Dieses setzt sich zusammen aus einem aus mehreren geneigten Rollenbahnen bestehenden Lagerbereich, einem dem Lagerbereich vorgeschalteten Bestückungsbereich für neu einzulagernde Waren, sowie einem dem Lagerbereich nachgeschalteten Kommissionierbereich. In dem Kommissionierbereich ist jede der dort endenden Rollenbahnen mit einer Entnahmevorrichtung versehen, wobei die einzelnen Entnahmevorrichtungen unabhängig voneinander betätigbar sind, um so jeweils eine Ware von der betreffenden Rollenbahn zu entnehmen. Zur Einlagerung neuer Waren besteht der Bestückungsbereich aus einer quer zu den Lagergassen angeordneten Transportbahn. Ein oder mehrere Schieber schieben die auf der Transportbahn herangeführten Waren in die jeweils hierfür bestimmten Lagergassen. Das Kommissionierlager nach der US 4, 915, 566 ist als Container- oder Behälterlager konzipiert und ist für eine Kommissionierung von Stückgütern, welche hinsichtlich Gewicht und Größe sehr unterschiedlich ausgebildet sind, nur eingeschränkt geeignet.

Aus der DE 295 19 805 U1 ist ein Querförderer bekannt, mit dem sich über eine Transportbahn zugeführte Waren oder Warengebinde in quer hierzu angeordnete Lagergassen eines Stückgutlagers überführen lassen. Vor jeder Lagergasse ist, baulich in die Transportbahn integriert, ein Querförderer angeordnet. Dieser besteht aus einem Riemenpaar mit daran befestigten Greifern. Setzen sich die Riemen in Bewegung, so hintergreifen die Greifer die jeweilige Ware und fördern diese in die jeweilige Lagergasse. Wegen der vielen Querförderer sind die Investitionskosten des Stückgutlagers nach der DE 295 19 805 U1 relativ hoch.

Außerhalb des Gebietes der Lagertechnik beschreibt die DE 27 42 579 eine Transportvorrichtung in Form eines sogenannten Rollenstauförderers. In einer solchen Transportvorrichtung wird über einen kurzen Zeitraum der Transportfluss der auf einem Rollenförderer entlang laufenden Waren angehalten und später wieder freigegeben, wobei das Entstehen und die Auflösung eines Warenstaus mittels einer steuerbaren Sperre erfolgt. Zumindest ein Teil der verwendeten Rollen bzw. Walzen ist angetrieben, wozu ein gemeinsames Antriebsmittel in Gestalt eines unter den Rollen bzw. Walzen hindurchgeführten Antriebsriemens verwendet wird. Bei Überschreiten eines Widerstandes durch Rückstau löst eine Magnetkupplung aus, welche den Antrieb des Rollenförderers abschaltet und so eine zu hohe Rückstaukraft vermeidet. In den Transportweg der Transportvorrichtung können auch Strecken mit leichtem Gefälle oder mit leichter Steigung eingebaut sein. Bei einer Steigung arbeitet die Magnetkupplung mit einem erhöhten, bei einer Gefällstrecke mit einem niedrigeren Auslösemoment.

Ebenfalls auf dem technischen Gebiet der Transportvorrichtungen offenbart auch die US 3,756,376 den Antrieb einer Vielzahl der Walzen bzw. Rollen der Rollenbahn über ein gemeinsames Antriebsmittel in Gestalt eines unter den Rollen hindurchgeführten Antriebsriemens. Bezeichnet wird diese Rollenbahn als "gravity-type roller". Soweit dieser englischsprachige Begriff eine Rollenbahn mit schwerkraftbedingter Förderung (durch Neigung der Rollenbahn) zu bezeichnen scheint, liegt jedoch bei fachmännischer Betrachtung eine fehlerhafte , zumindest mißverständliche Offenbarung im Sinne der Entscheidung T 77/87 der technischen Beschwerdekammer des Europäischen Patentamtes vor. Die korrekte Offenbarung findet sich in den beiden parallelen Ursprungsanmeldungen DE 1 939 654 und DE 2 033 238 A1 des selben Anmelders. Diese Offenbarung zeigt, daß ein rein horizontal arbeitender, angetriebener Rollenförderer gemeint ist. Nur ein solcher ist auch dargestellt.

Der Erfindung liegt die **Aufgabe** zugrunde, ein Kommissionierlager zu schaffen, mit dem sich hohe Umschlagraten erzielen lassen und welches sich bei geringen Investitionskosten auch für die gleichzeitige Verarbeitung hinsichtlich Gewicht und Größe sehr unterschiedlicher Stückgüter eignet.

Zur Lösung wird ein Kommissionierlager mit den Merkmalen des Anspruchs 1 vorgeschlagen.

Das Kommissionierlager verfügt über einer für eine Mehrzahl von Lagergassen gemeinsamen Querförderer, der entlang der Transportbahn in eine Position vor jeder der Lagergassen einstellbar ist. Diese Lösung führt zu geringeren Investitionskosten, erfordert jedoch eine Verfahrbarkeit des Querförderers in Längsrichtung entlang der Transportbahn.

Bei den Waren kann es sich um hinsichtlich ihres Gewichtes und ihrer Größe sehr unterschiedliche Stückgüter handeln. Durch Verwendung einer in Richtung auf die Entnahme Vorrichtungen hin abschüssig geneigten Rollenbahn für jede Lagergasse, deren Rollen oder Walzen über ein gemeinsames Antriebsmittel in Drehung versetzbar sind, werden leichte wie schwergewichtige, große wie kleine Stückgüter bzw. Gebinde gleichermaßen sicher in den Lagergassen transportiert und bevorratet. Selbst in der herkömmlichen Kommissioniertechnik kritische Stückgüter, wie z. B. gefüllte Getränkekisten aus Kunststoff, lassen sich mit Hilfe der angetriebenen Rollenbahn störungsfrei verarbeiten.

Gemäß einer bevorzugten Ausgestaltung des Kommissionierlagers ist das gemeinsame Antriebsmittel ein endloser Antriebsriemen. Dieser kann zur Erzielung eines geringen Antriebsschlupfes bei zugleich kostengünstiger Gestaltung der Rollenbahn zwischen den Rollen bzw. Walzen und einem Druckwiderlager hindurchgeführt sein. Als Druckwiderlager werden antriebslose Gegendruckrollen bevorzugt.

Zur Erzielung einer hinreichenden konstruktiven Freiheit bei der Gestaltung der Antriebs- und Umlenkeinrichtungen für das Antriebsmittel der Rollenbahn wird ferner vorgeschlagen, daß die Umlenkung des als Antriebsmittel dienenden Antriebsriemens über Umlenkrollen erfolgt, die sich in oder unter dem Bestückungsbereich und/oder dem Kommissionierbereich befinden.

Gemäß einer bevorzugten Ausgestaltung ist bei den Rollen bzw. Walzen des Kommissionierlagers vorgesehen, daß der Antriebsriemen ein vorzugsweise als Buchse gestaltetes Element antreibt, welches drehbar auf der Rolle bzw. Walze gelagert ist. Auf diese Weise wird eine gezielte, wenn auch nur geringe Reibung zwischen der frei drehbaren Buchse und der Rolle bzw. Walze erzielt. Dies führt zu einem sehr "sanften" Antrieb der Walze mit nur geringem Antriebsmoment, wohingegen bei Ansteigen dieses Antriebsmomentes die Reibflächen zwischen Buchse und Zapfen durchdrehen, so daß kein nennenswertes Antriebsmoment von der Buchse auf die Walze mehr übertragen wird. Von Vorteil ist es, wenn hierzu der Reibwert zwischen Rolle bzw. Walze und dem Element geringer ist, als der Reibwert zwischen dem Element und dem Antriebsriemen. Der so erzielte "sanfte" Antrieb der Walzen führt zu einer Verringerung des Förderdrucks der Rollenbahn, so daß vor allem auf die an erster Stelle am entnahmeseitigen Ende der Lagergasse angeordneten Stückgüter nur ein geringer Druck ausgeübt wird. Von Vorteil ist ferner, daß auch die Entnahmevorrichtungen des Kommissionierbereichs wegen des geringeren Staudrucks der Waren mit geringeren Antriebsleistungen betrieben werden können.

Vorzugsweise ist von den Umlenkrollen, über die der Antriebsriemen geführt ist, die unter dem Kommissionierbereich angeordnete Umlenkrolle angetrieben. Auf diese Weise kann der Antrieb der Rollenbahn über denselben Hauptantrieb erfolgen, der auch den Antrieb der Entnahmevorrichtungen übernimmt. Die Zahl der insgesamt erforderlichen Antriebe in Form z. B. von Elektromotoren läßt sich auf diese Weise reduzieren, und das Kommissionierlager preiswerter herstellen. Hierzu wird vorgeschlagen, daß die Bewegung des Antriebsmittels der Rollenbahn aus der Drehbewegung einer gemeinsamen Hauptantriebswelle abgeleitet wird, die außerdem mehrere Entnahmevorrichtungen antreibt.

Da die Rollenbahnen in Richtung auf die Entnahmevorrichtungen hin abschüssig geneigt sind, erfolgt der Transport der auf den Rollenbahnen aufliegenden Stückwaren unter Ausnutzung zweier unterschiedlicher Mechanismen, und zwar der Schwerkraft infolge der abschüssig geneigten Rollenbahn, und des motorischen Antriebs der Rollen bzw. Walzen mittels des gemeinsamen Antriebsmittels. Dieser gleichsam doppelte Bewegungsmechanismus führt zu einer hervorragenden Gleichmäßigkeit in der Transportgeschwindigkeit der Stückgüter, und zwar unabhängig von deren Gewicht und Größe. Getränkekisten mit relativ hohem spezifischen Gewicht werden genauso schnell entlang der Rollenbahn transportiert wie besonders leichte Gebinde, wie z. B. Kartonverpackungen mit Kartoffelchips oder Gebinde mit Toilettenpapier. Als für die Erzielung dieser Vergleichmäßigung besonders geeignet hat sich ein Neigungswinkel der Rollenbahn von 2,5 bis 6 %, vorzugsweise 3 bis 5,5 % herausgestellt.

Eine bevorzugte Ausgestaltung des Kommissionierlagers ist dadurch gekennzeichnet, daß sich entlang den Entnahmevorrichtungen und quer zu den Lagergassen eine vorzugsweise kontinuierlich angetriebene Transportbahn für die mit Hilfe der Entnahmevorrichtung entnommenen Waren erstreckt, und daß Bestandteile jeder Entnahmevorrichtung ein in den Förderweg der Rollenbahn ragendes, betätigbares Rückhalteelement sowie ein in Förderrichtung hinter dem Rückhalteelement angeordneter Horizontalförderer sind, dessen Fördergeschwindigkeit größer als die Fördergeschwindigkeit der Rollenbahn ist. Vorzugsweise ist die Fördergeschwindigkeit des Horizontalförderers mindestens 25 % größer als die Fördergeschwindigkeit der Rollenbahn. Erreicht wird auf diese Weise eine sichere und störungsfreie Trennung der jeweils vordersten, zu entnehmenden Ware von den dahinter angeordneten, über die Rollenbahn nachgeförderten Waren.

Zur Erzielung einer konstruktiv einfachen Ausgestaltung des Kommissionierbereichs wird ferner vorgeschlagen, daß der Antrieb einer Mehrzahl der Horizontalförderer mittels einer gemeinsamen Antriebswelle erfolgt, die sich quer zu den Lagergassen erstreckt.

Vorgeschlagen wird ferner eine gesteuert schaltbare Kupplung zum zeitlich begrenzten Ableiten einer den Förderweg freigebenden Entsperrbewegung des Rückhalteelements aus der Drehbewegung der gemeinsamen Antriebswelle, wobei die Kupplung jeder Entnahmevorrichtung getrennt von den übrigen Kupplungen ansteuerbar ist. Anders als für die Entsperrbewegung ist es für die spätere erneute Sperrbewegung des Rückhalteelements nicht erforderlich, auf die vorhandenen motorischen Antriebe zurückzugreifen. Vielmehr reicht es aus, wenn das Rückhalteelement mit Rückstellmitteln versehen ist, die das Rückhalteelement mit einer Rückstellkraft in Richtung seiner Sperrbewegung beaufschlagen, wobei die Rückstellkraft geringer ist als die Gewichtskraft der in der Lagergasse lagernden Waren/Warengebinde. Diese Rückstellkraft kann z. B. durch die Gewichtskraft oder die Kraft einer geeigneten Rückstellfeder erzeugt werden.

Vorzugsweise umschließt die Kupplung die gemeinsame Antriebswelle ringförmig, und das Abtriebsteil der Kupplung ist ein Nocken, der bei Ansteuerung der Kupplung gegen das Rückhalteelement schwenkt.

Mit dem Ziel einer kompakten Gestaltung des Kommissionierbereichs wird vorgeschlagen, daß sich der Horizontalförderer aus einer angetriebenen ersten Riemenscheibe, mindestens einer weiteren, mitlaufenden Riemenscheibe sowie einem über die Riemenscheiben geführten, endlosen Riemen zusammensetzt, wobei die angetriebene Riemenscheibe das vordere Ende und die mitlaufende Riemenscheibe das hintere Ende des Horizontalförderers definiert.

Um die Anzahl der elektrischen Antriebe möglichst gering zu halten, wird mit einer weiteren Ausgestaltung vorgeschlagen, daß die erste Riemenscheibe auf einer Antriebswelle sitzt, und daß die Antriebswelle über ein zwischengeschaltetes Getriebe in dauernder Drehverbindung mit einer mehrere Rollenbahnen antreibenden Hauptantriebswelle steht. Auf diese Weise läßt sich der Antrieb des Horizontalförderers von der Bewegung der Hauptantriebswelle ableiten, wodurch separate Antriebsquellen entfallen.

In einer bevorzugten Ausgestaltung des Querförderers wird vorgeschlagen, daß dieser mit Riemenscheiben versehen ist, über die ein endloser Antriebsriemen oder eine Antriebskette geführt ist, und daß an dem Antriebsriemen bzw. der Antriebskette zwei Mitnehmerelemente für die Ware angeordnet sind.

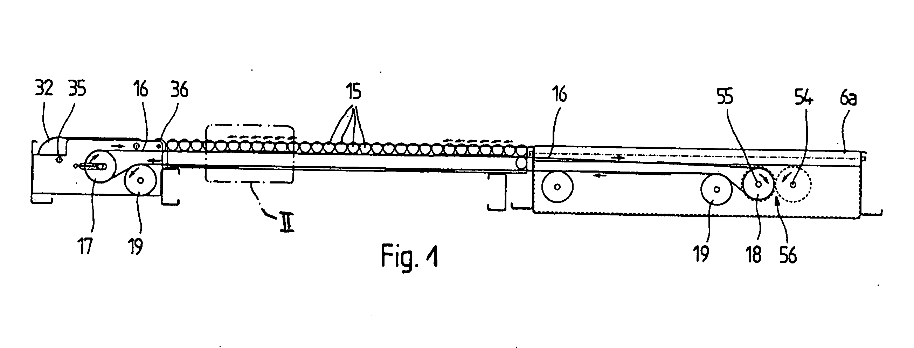

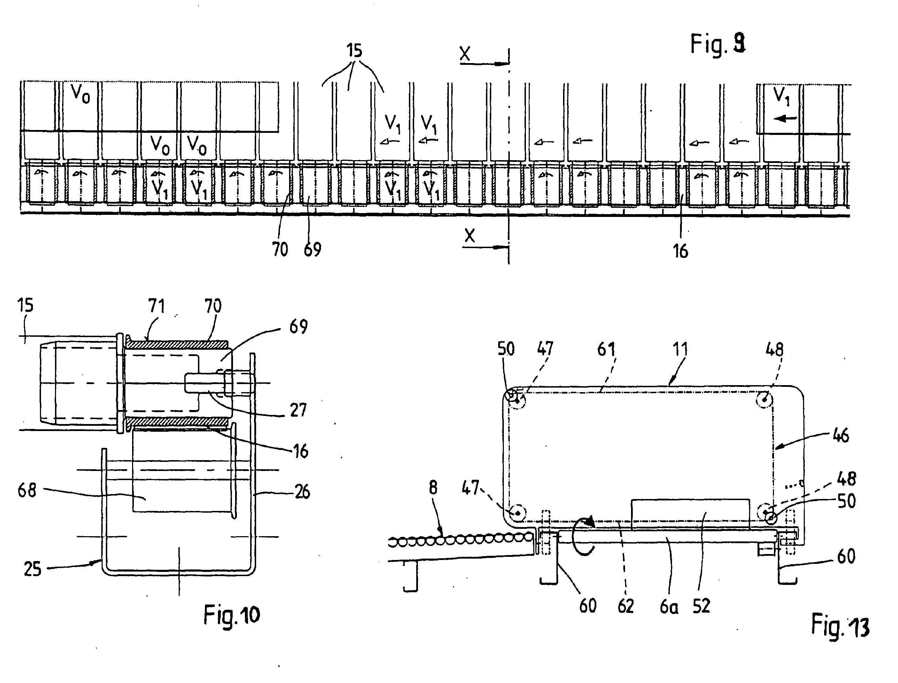

Nachfolgend werden erfindungsgemäße Kommissionierlager anhand von Ausführungsbeispielen und unter Bezugnahme auf die Zeichnungen erläutert. Die Fign. 1 bis 4 zeigen ein erstes Ausführungsbeispiel eines Kommissionierlagers, die Fign. 5 bis 13 ein zweites Ausführungsbeispiel eines Kommissionierlagers. Im einzelnen zeigen die Zeichnungen:
- Fig. 1: einen Schnitt durch eine Lagergasse eines Kommissionierlagers mit zugehörigem Bestückungsbereich sowie zugehöriger Entnahmevorrichtung;
- Fig. 2: die Einzelheit II in Fig. 1 in vergrößertem Maßstab:
- Fig. 3: einen Teilschnitt durch eine Walze der Lagergasse;
- Fig. 4: in sechs Verfahrensstadien Einzelheiten der Entnahme der Waren auf der Kommissionierseite des Kommissionierlagers;
- Fig. 5: in perspektivischer Darstellung einen Teil eines sich aus einem Bestückungsbereich, einem Lagerbereich und einem Kommissionierbereich zusammensetzenden Kommissionierlagers;
- Fig. 6: eine Draufsicht auf einen Teil des Kommissionierlagers in vergrößerter Darstellung, wobei aus Gründen der Übersicht der Lagerbereich stark verkürzt dargestellt ist;
- Fig. 7: eine Seitenansicht einer Lagergasse des Kommissionierlagers;
- Fig. 8: die Seitenansicht der Lagergasse nach Fig. 7 in vergrößerter, ausschnittsweiser Darstellung;
- Fig. 9: eine Draufsicht auf einen Seitenbereich der Lagergasse nach Fig. 8;
- Fig. 10: einen Teilschnitt entlang der Linie X-X der Fig. 9;
- Fig. 11: in sechs Verfahrensstadien Einzelheiten der Entnahme der Waren auf der Kommissionierseite des Kommissionierlagers;
- Fig. 12a: eine Ausschnittsvergrößerung der ersten Teilfigur der Fig. 11;
- Fig. 12b: eine Auschnittsvergrößerung der zweiten Teilfigur der Fig. 11 und
- Fig. 13: in einer Seitenansicht Einzelheiten eines im Bestückungsbereich des Kommissionierlagers angeordneten Querförderers.

Das Kommissionierlager für Stückgüter einschließlich gefüllter Getränkekisten und für Lebensmittel in Kartongebinden, die im Großhandel eine sehr hohe Umschlagrate haben, setzt sich in erster Linie aus einem Lagerbereich 1, einem dem Lagerbereich 1 vorgeschalteten Bestückungsbereich 2 und einem dem Lagerbereich 1 nachgeschalteten Kommissionierbereich 3 zusammen (Fig. 5). In dem Bestückungsbereich 2 erfolgt die Einlagerung neu einzulagernder Stückgüter in den richtigen Lagerort innerhalb des Lagerbereiches 1. In dem Kommissionierbereich 3 werden die einzelnen Stückgüter entsprechend der Kommission rechnergesteuert aus dem Lagerbereich 1 entnommen und an einen Ort gefördert, an dem dann die Zusammenstellung und gegebenenfalls Verpackung der Kommissionen zu größeren Verpackungsgebinden erfolgt. Zur Entnahme der einzelnen Waren aus dem Lagerbereich 1 sind Entnahmevorrichtungen 4 vorgesehen, die die aus dem Lagerbereich 1 einzeln entnommenen Waren auf eine nachgeordnete Transportbahn 5 ablegen, entlang der dann der Weitertransport der Waren erfolgt.

Auch die Zuförderung der Waren im Bestückungsbereich 2 erfolgt mittels einer kontinuierlich angetriebenen Transportbahn 6, die sich, ebenso wie die Transportbahn 5 des Kommissionierbereichs 3, aus einer Vielzahl angetriebener Transportwalzen zusammensetzen kann, auf denen die transportierten Stückgüter entlangrollen.

Der Lagerbereich 1 setzt sich aus einer Mehrzahl parallel zueinander ausgerichteter Lagergassen 7 zusammen. Die Lagergassen 7 sind in Richtung auf die Entnahmevorrichtungen 4 hin leicht abschüssig geneigt und bestehen aus Rollenbahnen 8 aus Rollen oder Walzen, die zu ihren beiden Seiten in Profilen gelagert sind. Durch Begrenzungen 9 sind die einzelnen Lagergassen 7 voneinander getrennt, so daß Waren nicht versehentlich in benachbarte Lagergassen gelangen können. Im Rahmen der nachfolgend näher erläuterten Ausgestaltungen kann die Funktion der Begrenzungen 9, d. h. die seitliche Führung der Waren, auch durch Spurkränze an den Rollen bzw. Walzen erzielt werden.

Bei dem Kommissionierlager befinden sich in jeder Lagergasse 7 ausschließlich Waren bzw. Stückgüter derselben Art. Bei dem dargestellten, aus insgesamt vier Lagergassen bestehenden Lagerbereich 1 ist daher eine Lagerung von vier unterschiedlichen Warenarten möglich. Die Waren derselben Warenart sind hintereinander liegend in der jeweiligen Lagergasse 7 angeordnet, wobei sie sich infolge eines nachfolgend noch näher beschriebenen Antriebes der Rollenbahn bis an das dem Kommissionierbereich 3 zugewandte Ende der Lagergasse 7 bewegen, und die vorderste Ware dort an einem Rückhalteelement festgehalten wird. Die Förderung der Waren entlang der Rollenbahnen 8 wird ferner unterstützt durch die Wirkung der Schwerkraft infolge der abschüssigen Neigung der Rollenbahnen unter dem Winkel α.

Die insgesamt vier Lagergassen 7 bilden gemeinsam ein Modul 10. Mehrere solcher Module können nebeneinander angeordnet werden, so daß sich, abhängig von den räumlichen Gegebenheiten, bis zu 100 Lagergassen nebeneinander und mit gemeinsamen Einrichtungen des Bestückungsbereichs 2 und des Kommissionierbereichs 3 anordnen lassen. Zusätzlich kann das dargestellte Kommissionierlager auch mehrfach übereinander angeordnet werden, um so eine Vervielfachung der Platzausnutzung zu erreichen.

Die Transportbahn 6 ist allen Lagergassen 7 gemeinsam, weshalb über die Transportbahn 6 auch Waren unterschiedlicher Art herangefördert werden.

In dem Kommissionierbereich 3 werden die Waren mittels der Entnahmevorrichtung 4 einzeln aus den Lagergassen 7 entnommen und auf die gemeinsame Transportbahn 5 überführt, die sich quer zu den Lagergassen erstreckt. Jeder einzelnen Lagergasse 7 ist eine eigene Entnahmevorrichtung 4 zugeordnet, weshalb Waren zugleich aus mehreren Lagergassen 7 entnommen und auf die hinreichend breit gestaltete Transportbahn 5 überführt werden können.

Einzelheiten und Funktionsweise der Rollenbahnen 8 des Lagerbereichs werden nachfolgend erläutert.

Die Walzen 15 jeder Rollenbahn sind über ein allen Walzen der Rollenbahn gemeinsames Antriebsmittel in Drehung versetzbar. Dieses gemeinsame Antriebsmittel ist ein endloser Antriebsriemen 16, der über Umlenkrollen 17, 18 geführt ist. Die Umlenkrolle 17 befindet sich unter dem Kommissionierbereich 3, und die Umlenkrolle 18 unter dem Bestückungsbereich 2 des Kommissionierlagers. Zusätzlich vorgesehen sind geeignete Spannrollen 19, die den für den ordnungsgemäßen Transport des Antriebsriemens 16 erforderlichen Spanndruck auf den Antriebsriemen erzeugen. Diese Spannung kann jedoch auch unmittelbar über die Umlenkrollen 17 bzw. 18 erzeugt werden.

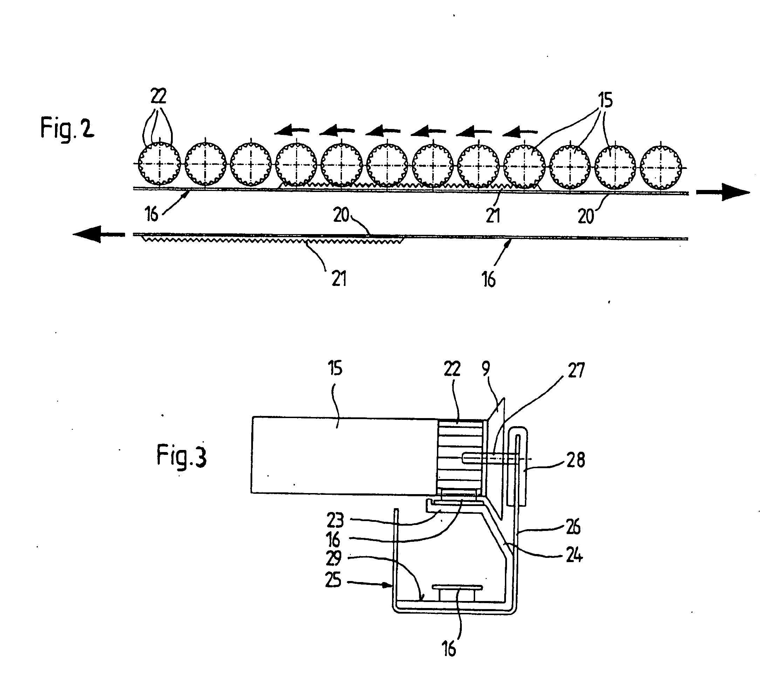

Die Fign. 2 und 3 lassen erkennen, wie der Antriebsriemen 16 den Antrieb der einzelnen Walzen 15 der Rollenbahn bewirkt. Der Antriebsriemen 16 besteht aus einem durchgehenden und über seine gesamte Länge gleichbleibend dicken Grundkörper 20 sowie aus auf dem Grundkörper 20 abschnittsweise befestigten Antriebsabschnitten 21 in Gestalt von gezahnten Bändern. Die Antriebsabschnitte 21 bedecken jedoch nur einen Teil der Länge des Antriebsriemens 16, so daß sich zwischen den Antriebsabschnitten 21 jeweils weitere Abschnitte finden, die keine Verzahnung aufweisen. Beide Gruppen, d. h. die mit den Antriebsabschnitten 21 versehenen Abschnitte des Antriebsriemens 16, und die nur aus dem Grundkörper 20 bestehenden Abschnitte des Antriebsriemens 16, wechseln sich ab, wobei vorzugsweise die Distanzen zwischen aufeinanderfolgenden Antriebsabschnitten 21 gleich groß sind.

Die Walzen 15 sind an ihren Enden mit einer Gegenverzahnung 22 versehen, die mit der Zahnung der Antriebsabschnitte 21 kämmt. Auf diese Weise werden nur jene Walzen 15 angetrieben, an deren Unterseite gerade einer der Antriebsabschnitte 21 vorbeistreicht. Diejenigen Walzen 15 hingegen, unter denen sich gerade nur der Grundkörper 20 des Antriebsriemens 16 befindet, werden nicht angetrieben.

Damit der Antriebsriemen 16 im Bereich seiner Antriebsabschnitte 21 sicher mit der Gegenverzahnung 22 der Walzen 15 kämmt, muß die sich ergebende Reaktionskraft aufgenommen werden. Hierzu dient ein Druckwiderlager 23, welches sich in Gestalt einer durchgehenden Fläche über die gesamte Länge der Rollenbahn 8 erstreckt. Der Obertrum des Antriebsriemens 16 wird also zwischen dem Druckwiderlager 23 und den einzelnen Walzen 15 hindurchgezogen. Der Abstand ist der Gestalt, daß die Antriebsabschnitte 21 des Antriebsriemens 16 spielfrei durch diesen Spalt hindurchgezogen werden, so daß ein echtes Kämmen zwischen Verzahnung und Gegenverzahnung 22 erfolgt. Das Druckwiderlager 23 wird durch die flache Oberseite eines Profils 24 gebildet, welches in ein Rollenbahnprofil 25 eingesetzt ist. Ein äußerer Schenkel 26 des Rollenbahnprofils 25 dient der Lagerung der einzelnen Rollen bzw. Walzen 15. Die Rollen bzw. Walzen 15 sind hierzu mit kurzen Achsen 27 versehen, die über aufsteckbare Clips 28 an dem äußeren Schenkel 26 des Rollenbahnprofils 25 befestigt sind. Die Clips 28 ermöglichen es, einzelne Walzen schnell und einfach gegen andere Walzen auszutauschen. Beim Rücktransport läuft der Untertrum des Antriebsriemens 16 innerhalb des Rollenbahnprofils 25, vorzugsweise, wie dies Fig. 3 erkennen läßt, auf der glattflächig gestalteten Oberseite 29 des Profils 24.

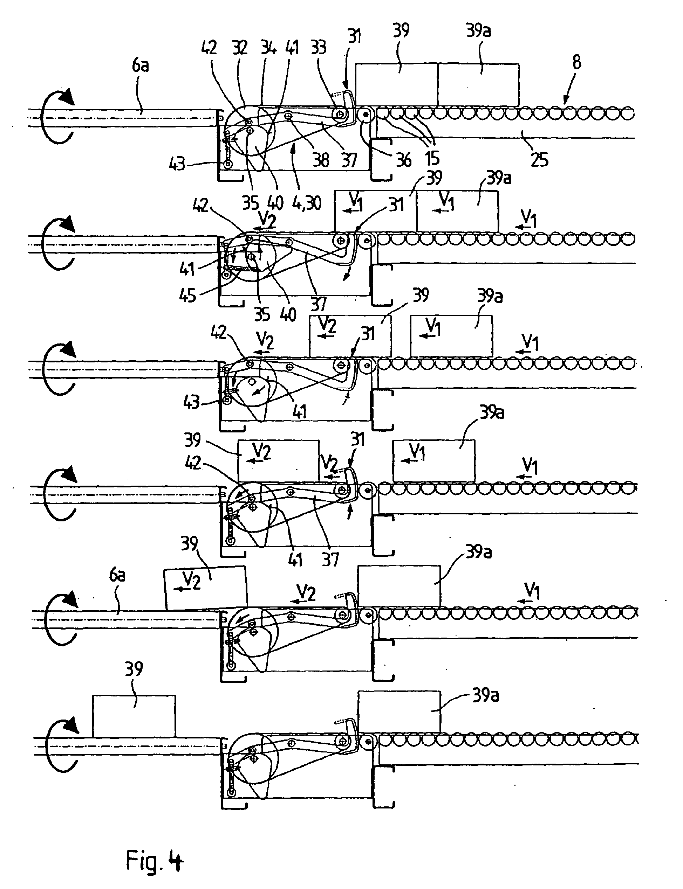

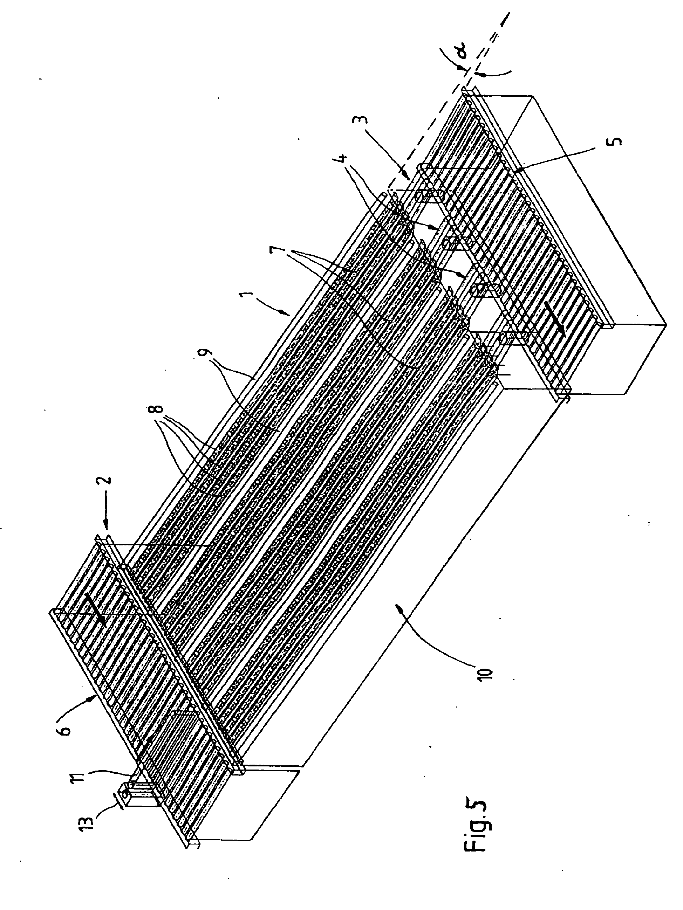

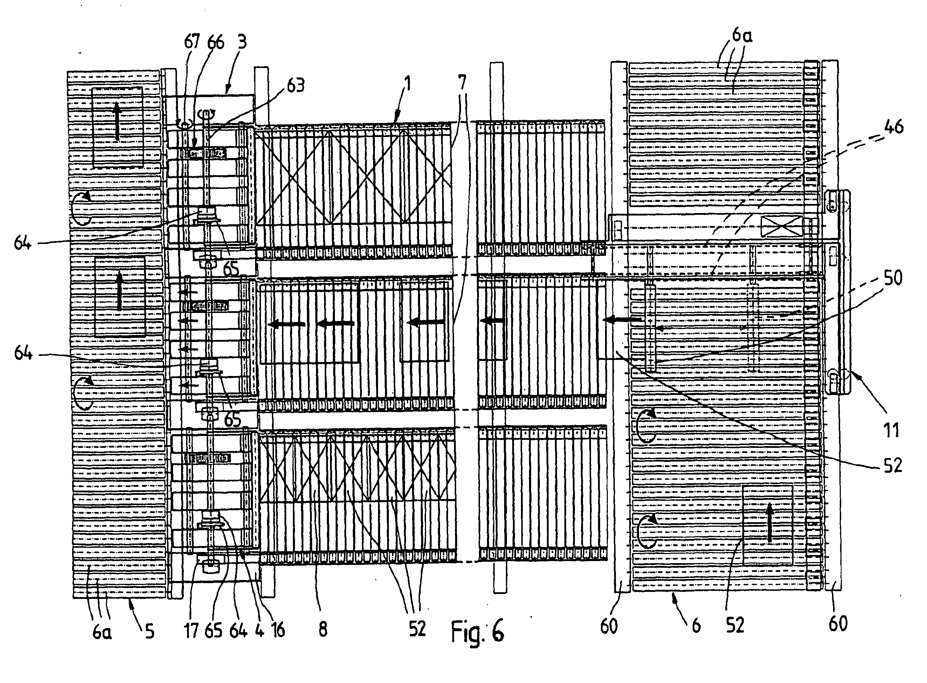

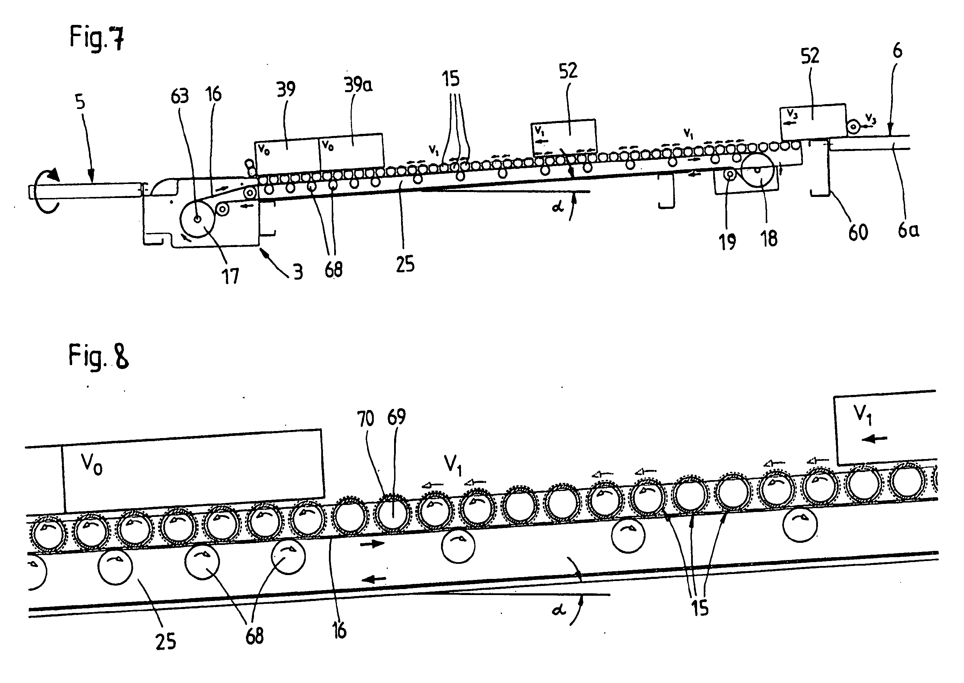

Anhand der Fig. 4 werden nachfolgend Einzelheiten und Funktionsweise der Entnahmevorrichtungen 4 erläutert.

Jede Entnahmevorrichtung 4 setzt sich aus einem Horizontalförderer 30 und einem Rückhalteelement 31 zusammen. Der Horizontalförderer 30, dessen Förderebene gleich der Förderebene der Rollenbahn 8 ist, besteht aus zwei Riemenscheiben 32, 33, über die ein breiter Riemen 34 geführt ist. Jeder Horizontalförderer 30 besteht aus insgesamt drei dieser Riemen 34. Die Riemenscheibe 32, welche weiter von der Rollenbahn 8 entfernt ist, ist angetrieben und sitzt hierzu unmittelbar auf einer Antriebswelle 35. Die Antriebswelle 35 ist kontinuierlich angetrieben und treibt gleichzeitig die Horizontalförderer 30 mehrerer Lagergassen an. Alle Horizontalförderer 30 laufen daher im Dauerbetrieb. Anders als die Riemenscheibe 32, ist die jeweils andere Riemenscheibe 33 des Horizontalförderers 30 nicht angetrieben. Die Riemenscheibe 33 befindet sich möglichst nahe an der Rollenbahn 8. Beim Ausführungsbeispiel befindet sie sich zwischen der Riemenscheibe 33 und der nächstgelegenen Walze 15 der Rollenbahn noch eine kleinere, frei mitlaufende Rolle 36.

Bestandteil des Rückhalteelements 31 der Entnahmevorrichtung 4 ist ferner ein Hebel 37, an dessen Ende sich das Sperrorgan des Rückhalteelements befindet. Der Hebel 37 ist an einer horizontalen Achse 38 gelagert. Das Rückhalteelement 31 ist zwischen zwei Stellungen um die Achse 38 hin- und herschwenkbar. In der ersten Stellung welche in Fig. 4 oben dargestellt ist, ragt das Sperrorgan des Rückhalteelements 31 in den Förderweg für die Waren 39. In seiner anderen Stellung senkt sich das Rückhalteelement 31 bis in die Förderebene oder darunter ab. Diese Stellung des Rückhalteelementes 31 ist in den an zweiter und dritter Stelle dargestellten Verfahrensstadien der Fig. 4 zu entnehmen.

Um das Rückhalteelement 31 aus seiner Sperrstellung in seine Entsperrstellung zu überführen, ist ein Nocken 40 vorgesehen, der auf einer zu der Antriebswelle 35 koaxialen Achse gelagert ist. Der Nocken 40 verfügt über eine Nockenfläche 41, die an einer Rolle 42 abläuft, wobei die Rolle 42 sich an dem Hebel 37 befindet. Beim Ausführungsbeispiel ist der Hebel 37 ein zweiarmiger Hebel, wobei sich am Ende des einen Arms das Sperrorgan befindet, wohingegen auf der Länge des anderen Arms die Rolle 42 gelagert ist.

Wird der Nocken 40, wie dies im Wechsel vom ersten Verfahrensstadium der Fig. 4 auf das zweite Verfahrensstadium erkennbar ist, um ca. 90° verschwenkt, führt dies infolge des Zusammenwirkens der Nockenfläche 41 mit der Rolle 42 zu einem Verschwenken des Hebels 37, wodurch sich das Rückhalteelement 31 bis unter die Förderebene der Rollenbahn absenkt. Die erste Ware 39 wird von diesem Zeitpunkt an nicht mehr durch das Rückhalteelement 31 zurückgehalten und rollt daher, angetrieben durch die Rollenbahn sowie ggfs. zusätzlich durch die Schwerkraft, auf den Horizontalförderer 30. Sobald die Unterseite der ersten Ware 39 in Kontakt mit dem Riemen 34 des Horizontalförderers 30 kommt, folgt die Ware 39 fortan der Geschwindigkeit des Horizontalförderers 30. Diese ist - abhängig vom Warengewicht - um mindestens 25 % höher eingestellt, als die Fördergeschwindigkeit der Rollenbahn 8. Infolge dieser höheren Geschwindigkeit auf dem Horizontalförderer 30 trennt sich die erste Ware 39 von der nachfolgenden Ware 39a. In Fig. 4 ist dies mit den unterschiedlichen Geschwindigkeiten V₂ und V₁ wiedergegeben, wobei V₂ größer als V, ist.

In dem dritten Verfahrensstadium gemäß Fig. 4 überrollt die Ware 39, gefördert nahezu ausschließlich durch den Horizontalförderer 30 mit dessen Geschwindigkeit, das Rückhalteelement 31. Zu diesem Zeitpunkt hat sich der Nocken 40 infolge einer Zeitsteuerung bereits wieder abgesenkt. Gleichwohl verharrt das Rückhalteelement 31 in seiner abgesenkten Stellung, da seine Rückstellkraft geringer ist, als das Gewicht der Ware 39. Die genannte Rückstellkraft wird durch ein Gegengewicht 43 erzeugt, welches am zweiten Arm des Hebels 37 hängt. Erst wenn, wie dies im vierten Verfahrensstadium der Fig. 4 dargestellt ist, die Unterseite der Ware 39 über das Rückhalteelement 31 hinweggelangt ist, kann der Hebel 37 des Rückhalteelements unter der Wirkung des Gegengewichtes 43 wieder nach oben schwenken. Fortan ist die Bahn wieder blockiert, so daß die nachfolgende Ware 39a an dem Rückhalteelement 31 gestoppt wird. Es kann dann der nächste Entnahmevorgang eingeleitet werden, wobei sich das Verfahren wiederholt. Die von dem Horizontalförderer 30 abgeförderte Ware 39 gelangt auf die Transportwalzen 6a der kontinuierlich angetriebenen Transportbahn 5.

Der Antrieb des Nockens 40 wird von der kontinuierlichen Drehbewegung der Antriebswelle 35 abgeleitet. Hierzu sitzt auf der Antriebswelle 35 eine elektrische Magnetkupplung, deren Abtriebsteil der Nocken 40 ist. Nur bei der zeitlich begrenzten Erregung der Magnetkupplung erfolgt daher eine Betätigung des Nockens 40 und damit die Entsperrung des Rückhalteelements 31. Die hierfür aufzubringende Antriebskraft ist relativ gering, weshalb für den Antrieb des Nockens 40 bereits eine kleine Magnetkupplung auf der Antriebswelle 35 ausreicht. Eine Zugfeder 45 zieht den Nocken 40 in seine Ruhestellung zurück.

Im Bestückungsbereich 2 ist ein für eine Mehrzahl von Lagergassen 7 gemeinsamer Querförderer 11 vorgesehen, der entlang der Transportbahn 6 in eine Position vor jeder der Lagergassen 7 einstellbar ist.

Die Draufsicht Fig. 6 läßt erkennen, daß sich entlang beider Längsseiten der Transportbahn 6 Schienen 60 erstrecken, auf denen der Querförderer 11 verschiebbar ist, wozu der Querförderer über einen geeigneten Antrieb verfügt.

Wie Fig. 13 erkennen läßt, besteht der Querförderer aus einem endlos umlaufenden Riemen 46 oder einer entsprechenden endlosen Kette. Riemen 46 bzw. Kette sind über Riemenscheiben 47, 48 geführt, so daß sich ein Obertrum 61 und ein Untertrum 62 ergeben. An dem Riemen bzw. der Kette befestigt sind die zwei Mitnehmerelemente 50, die, sobald sie sich auf der Höhe des Untertrums 62 des Antriebsriemens 46 befinden, unmittelbar über die Förderfläche 51 der Transportbahn 6 ragen. Wird der Querförderer 11 eingeschaltet, führt dies zu einem Antrieb des Riemens 46 bzw. der Kette, wobei das jeweils nächste Mitnehmerelement 50, sobald dieses die Höhe des Untertrums 62 erreicht, die dort befindliche Ware 52 ergreift, wodurch diese längs der jeweiligen Transportwalzen 6a bis in die Lagergasse 7 hineingeschoben wird. Beim Ausführungsbeispiel sind insgesamt zwei Mitnehmerelemente 50 vorgesehen, jedoch kann deren Anzahl auch geringer oder größer sein, was letztlich von der Breite der Transportbahn 6 abhängt. Werden nur zwei Mitnehmerelemente 50 verwendet, befinden sich diese während der Stillstandspausen in jenen Positionen, wie sie in Fig. 13 eingezeichnet sind, d. h. der die nächste Ware 52 mitnehmende Mitnehmer 50 befindet sich bereits auf dem Untertrum 62 und damit auf Höhe der Ware gleichsam in einer Warteposition.

Fig. 6 läßt noch erkennen, daß die Mitnehmer 50 langgestreckte, horizontale Walzen mit Drehachse quer zur Verschieberichtung sind.

Bei dem Kommissionierlager gemäß den Fign. 5 bis 13 erfolgt der Antrieb der Rollenbahnen 8 mittels einer Hauptantriebswelle 63, die sich im Kommissionierbereich 3 befindet. Diese Hauptantriebswelle 63 ist einheitlich für ein ganzes Modul 10 des Kommissionierlagers. Gemäß Fig. 5 besteht das Modul 10 aus insgesamt vier Lagergassen. Jedoch läßt sich ein Modul auch aus sechs oder acht Lagergassen kombinieren, die dann über eine eigene Antriebsquelle für die Hauptantriebswelle 63 verfügen. Diese Antriebsquelle wird eingeschaltet, sobald in einer der Lagergassen des betreffenden Moduls 10 Waren zu fördern sind, sei dies nun eine Förderung entlang einer der Rollenbahnen 8, oder eine Entnahmeförderung mittels einer der Entnahmevorrichtungen 4 des Moduls.

Die Hauptantriebswelle 63 ist für jede Lagergasse 7 mit einer Umlenkrolle 17 versehen, welche drehfest mit der Hauptantriebswelle 63 verbunden ist. Über die Umlenkrolle 17 ist der Antriebsriemen 16 für die Rollen bzw. Walzen der Rollenbahn 8 geführt. Ferner sitzen auf der Hauptantriebswelle 63 für jede Lagergasse eine eigene Kupplung 64, die ebenso wie die bereits beschriebenen Magnetkupplungen, die Hauptantriebswelle 63 ringförmig umgibt. Die Kupplungen 64 sind elektrisch ansteuerbar und treiben bei Bestromung einen Nocken 65, 40 an, dessen Einzelheiten nachfolgend noch näher erläutert werden.

Über ein stark übersetzendes Stirnradgetriebe 66 ist die Hauptantriebswelle 63 mit einer für jede Lagergasse getrennten, parallelen Welle 67 verbunden, die den Horizontalförderer 30 der Entnahmevorrichtung antreibt.

Bei dem hier beschriebenen Ausführungsbeispiel werden daher sowohl der Antrieb der Rollenbahn, als auch der Antrieb der Entnahmevorrichtung direkt oder indirekt von der Hauptantriebswelle 63 abgeleitet.

Wiederum ist der Antrieb der Rollenbahn nicht der einzige Transportmechanismus für die entlang der Rollenbahn geförderten Waren. Gemäß Fig. 7 ist die Rollenbahn 8 außerdem abschüssig mit einem Winkel α bezüglich der Horizontalen geneigt, so daß die auf der Rollenbahn aufliegenden Waren zusätzlich unter Einwirkung der Schwerkraft entlang der Rollenbahn gefördert werden. Der Neigungswinkel α ist relativ gering und beträgt vorzugsweise nur 4 %.

Gemäß Fig. 7 erfolgt der Antrieb der einzelnen Rollen bzw. Walzen 15 der Rollenbahn 8 über den einmal über die Umlenkrolle 17, und zum anderen über die Umlenkrolle 18 geführten, endlosen Antriebsriemen 16. Nur die Umlenkrolle 17 wird, da sie drehfest auf der Hauptantriebswelle 63 sitzt, angetrieben, wohingegen die Umlenkrolle 18 frei läuft und ausschließlich der Umlenkung dient. Die Rolle 19 vor der Rolle 18 erlaubt die Einstellung der Antriebsriemen-Vorspannung.

Anhand der Fign. 8 bis 10 werden nachfolgend Einzelheiten des Antriebs der einzelnen Walzen 15 erläutert. Der Antriebsriemen 16 besteht aus einem flachen, vorzugsweise gummierten Band, welches zwischen den Walzen 15 und Gegendruckrollen 68 hindurchgeführt ist. Die Gegendruckrollen 68 bilden hierbei das Druckwiderlager. Auf zwei bis vier Walzen 15 kommt eine Gegendruckrolle 68.

In Fig. 10 ist dargestellt, daß die Walzen 15 an jenen Enden, an denen mittels des Antriebsriemens 16 der Antrieb erfolgt, mit einem Zapfen 69 versehen sind, der vorzugsweise einen geringeren Durchmesser aufweist, als der Walzenkörper selbst. Auf dem koaxial zum Walzenkörper angeordneten Zapfen 69 sitzt eine Buchse 70, an deren äußerer Mantelfläche 71 der Antriebsriemen 16 mit seiner Oberseite reibschlüssig anliegt. Zapfen 69 und Buchse 70 sind vorzugsweise zylindrisch ausgebildet. Wesentlich ist, daß zwischen der Außenseite des Zapfens 69 und der Innenfläche der Buchse 70 nur eine geringe Reibung besteht, was z. B. durch eine geeignete Materialpaarung erreicht werden kann. Geeignet sind insbesondere leicht laufende Kunststoffe. Wesentlich ist ferner, daß der Reibwert zwischen Zapfen 69 und Buchse 70 geringer ist, als der Reibwert zwischen Buchse 70 und der Oberseite des Antriebsriemens 16.

Indem der Antriebsriemen 16 nicht unmittelbar auf die Walzen 15 einwirkt, sondern nur mittelbar über Elemente, die beim Ausführungsbeispiel als Buchsen 70 gestaltet sind, erfolgt ein sehr sanfter Antrieb der Walze 15. Sobald die Walze 15 gebremst wird, etwa infolge des Gewichtes des aufliegenden Warengebindes, führt dies zu einer Relativbewegung zwischen Zapfen 69 und Buchse 70, d. h der fest mit der Walze verbundene Zapfen 69 ruht, wohingegen sich die Buchse 70, angetrieben durch den Antriebsriemen 16, weiterdreht. Im Ergebnis erfolgt der Antrieb der Walzen mittels eines sich automatisch immer dann einstellenden Schlupfes, wenn der Widerstand der Walzen zu hoch wird. Letzteres ist immer dann der Fall, wenn sich die auf der Rollenbahn befindlichen Waren an dem Rückhalteelement 31 der jeweiligen Entnahmevorrichtung 4 rückstauen. Dieser Staudruck führt daher nicht zu einer erhöhten Belastung des Antriebs der Rollenbahn, vielmehr bleiben die Antriebskräfte infolge des sich an den Walzen 15 automatisch einstellenden Schlupfes sehr gering.

Infolge der Verwendung der Buchsen 70 stellt sich sogar ein doppelter Effekt ein: die Walzen 15 werden nicht nur sanft angetrieben, um z. B. besonders leichten Warengebinden einen einwandfreien Transport erst zu ermöglichen, sondern es kommt auch zu dem Effekt eines Abbremsens der Walzen 15. Dieser Effekt wird in Verbindung mit besonders schwergewichtigen Waren erzielt. Diese neigen infolge der Neigung der Rollenbahn 8 dazu, durch ihr hohes Gewicht zu hohe Geschwindigkeiten auf der Rollenbahn zu erreichen. In diesem Fall wirken die langsamer angetriebenen Walzen 15 wie Bremskörper, wobei die Relativgeschwindigkeit wiederum durch den sich zwischen den Walzen 15 und den Buchsen 70 einstellenden, mit dosierter Reibung arbeitenden Schlupf ausgeglichen wird. Durch die Kombination der leicht geneigten Rollenbahn 8 mit den unter Schlupf arbeitenden Buchsen 70 werden daher überdurchschnittlich schwere Waren gebremst, und überdurchschnittlich leichte Waren aktiv transportiert. Insgesamt stellt sich damit eine Vergleichmäßigung ein, sowohl leichte wie auch schwere Waren sowie große und kleine Gebinde werden mit im wesentlichen derselben Geschwindigkeit entlang den Lagergassen transportiert.

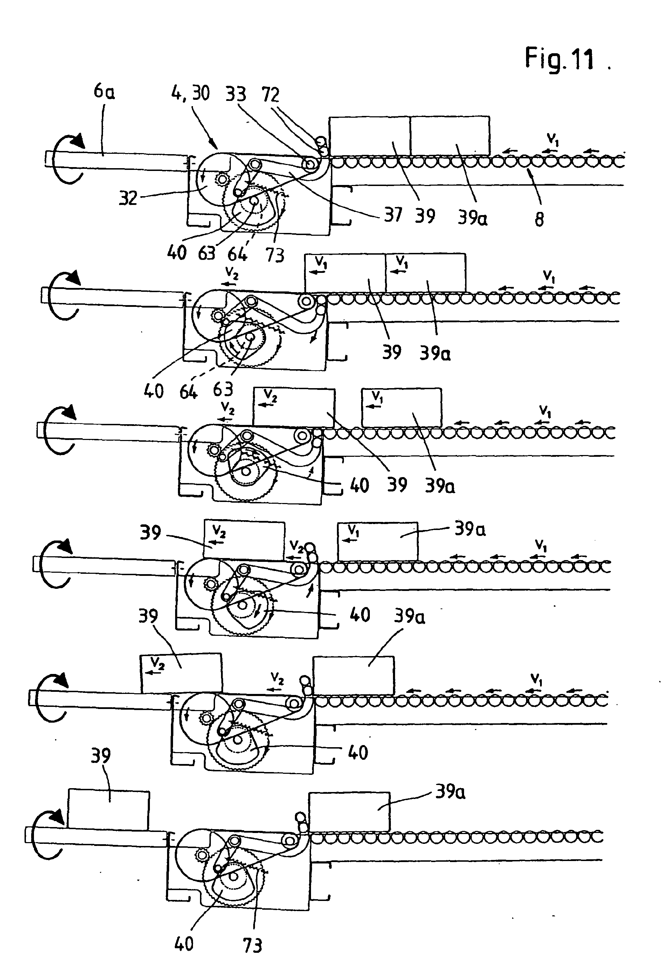

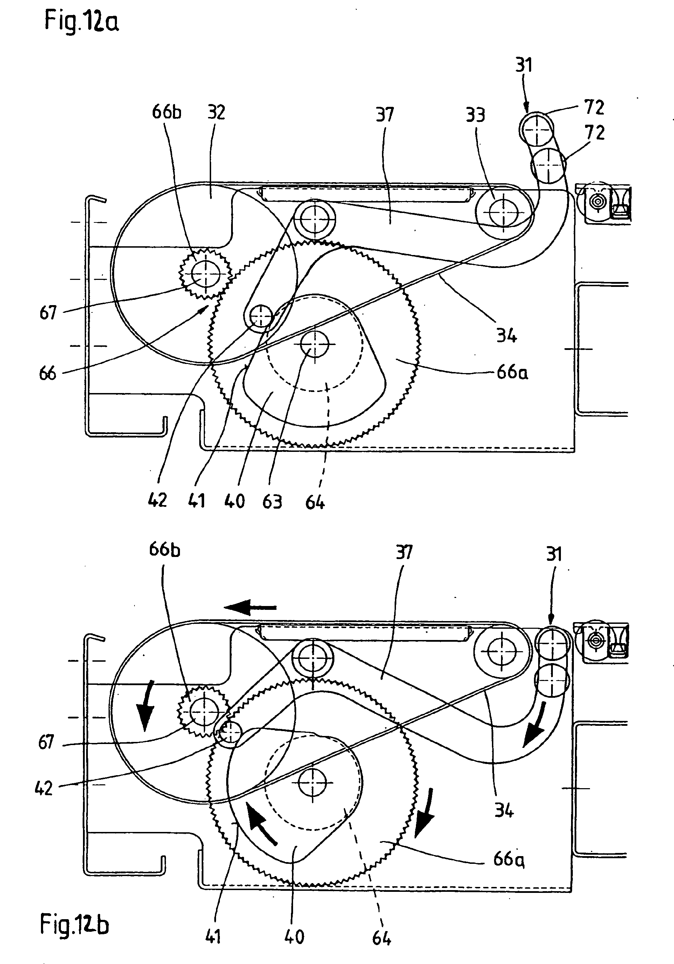

Der in den Fign. 11, 12a und 12b dargestellte Aufbau sowie die Funktionsweise der Entnahmevorrichtung 4 entsprechen im wesentlichen der Funktion sowie Arbeitsweise der Ausführungsform nach Fig. 4. Unterschiedlich ist die Gestaltung des Rückhalteelements 31. Dieses besteht aus zwei übereinander angeordneten, frei drehbaren Walzen 72. Der Vorteil dieser Walzen anstelle eines einfachen Bleches besteht in dem geringeren Reibungswiderstand beim Herunterziehen des Hebels 37. Außerdem läuft, wie die dritte Darstellung der Fig. 11 erkennen läßt, die gerade frei gegebene Ware 39 mit einem geringeren Widerstand über die Walze 72, als über ein starres Blech wie bei der Ausführungsform nach Fig. 4.

Zur Überführung des Rückhatteetements 31 aus seiner in Fig. 12a dargestellten Sperrstellung in seine in Fig. 12b dargestellte Endsperrstellung ist der Nocken 40 vorgesehen. Dieser verfügt über die Nockenfläche 41, die an der Rolle 42 des zweiarmigen Hebels 37 abläuft.

Wird der Nocken entsprechend den Fign. 12a und 12b um ca. 75° verschwenkt, führt dies infolge des Zusammenwirkens der Nockenfläche 41 mit der Rolle 42 des zweiarmigen Hebels 37 zu einem Verschwenken des Hebels 37, wodurch sich das Rückhalteelement 31 bzw. dessen als Sperrorgane dienenden Walzen 72 bis unter die Förderebene der Rollenbahn absenkt. Die erste Ware 39 rollt, angetrieben durch die Rollenbahn sowie ggfs. zusätzlich durch die Schwerkraft, auf den Horizontalförderer 30. Sobald die Unterseite der ersten Ware 39 in Kontakt mit dem Riemen 34 des Horizontalförderers 30 kommt, folgt die Ware 39 fortan der Geschwindigkeit des Horizontalförderers 30, die, abhängig vom Warengewicht, um mindestens 25 % höher eingestellt ist, als die Fördergeschwindigkeit der Rollenbahn 8.

Auch nachdem der Nocken 40 den Hebel 37 wieder freigibt, verharrt das Rückhalteelement 31 in seiner abgesenkten Stellung, da seine Rückstellkraft geringer ist, als das Gewicht der Ware 39. Die Rückstellkraft wird durch eine Zugfeder 73 erzeugt, welche am zweiten Arm des Hebels 37 eingehängt ist.

Bei der Entnahme einer Ware mittels der Entnahmevorrichtung führt der Nocken 40 eine vollständige Umdrehung, d. h. eine Drehung um 360° aus. Sein Antrieb wird von der kontinuierlichen Drehbewegung der Hauptantriebswelle 63 abgeleitet. Hierzu dient die bereits erwähnte, elektrisch angesteuerte Kupplung 64. Die Kupplung 64 kann eine Reibkupplung, eine Klauenkupplung oder eine magnetisch arbeitende Kupplung sein.

Auf der sich parallel zu der Hauptantriebswelle 63 erstreckenden Welle 67 sitzt die angetriebene Riemenscheibe 32 des Horizontalförderers. Über diese sowie über die Riemenscheibe 33 ist der breite Riemen 34 geführt, dessen Außenseite zugleich die Förderfläche der Entnahmevorrichtung ist. Die Fig. 6 läßt erkennen, daß bei jeder Entnahmevorrichtung insgesamt vier derartiger Riemen 34 verwendet werden, um eine gleichmäßige Auflage für die zu entnehmende Ware zu bilden. Der Kraftschluß zwischen der Hauptantriebswelle 63 und der Welle 67 erfolgt, wie bereits beschrieben, über das stark übersetzende Stirnradgetriebe 66 mit den Zahnrädern 66a auf der Hauptantriebswelle 63 und 66b auf der Welle 67.

Es versteht sich von selbst, daß die voranstehend im einzelnen beschriebenen Kommissionierlager programmgesteuert arbeiten. Trotz der Komplexität ist der Steuerungsaufwand relativ gering, da die überwiegende Zahl der Prozesse durch Ein- und Ausschalten der nahezu wartungsfrei arbeitenden Kupplungen kontrolliert wird.

### Bezugszeichenliste

- 1: Lagerbereich
- 2: Bestückungsbereich
- 3: Kommissionierbereich
- 4: Entnahmevorrichtung
- 5: Transportbahn
- 6: Transportbahn
- 6a: Transportwalze
- 7: Lagergasse
- 8: Rollenbahn
- 9: Begrenzung, Spurkranz
- 10: Modul
- 11: Querförderer
- 13: Bewegungsrichtung Querförderer
- 15: Walze
- 16: Antriebsriemen
- 17: Umlenkrolle
- 18: Umlenkrolle
- 19: Spannrolle
- 20: Grundkörper
- 21: Antriebsabschnitt
- 22: Gegenverzahnung
- 23: Druckwiderlager
- 24: Profil
- 25: Rollenbahnprofil
- 26: Schenkel
- 27: Achse
- 28: Clip
- 29: Oberseite
- 30: Horizontalförderer
- 31: Rückhalteelement
- 32: Riemenscheibe
- 33: Riemenscheibe
- 34: Riemen
- 35: Antriebswelle
- 36: Rolle
- 37: Hebel
- 38: Achse
- 39: zu entnehmende Ware
- 39a: nachfolgende Ware
- 40: Nocken
- 41: Nockenfläche
- 42: Rolle
- 43: Gegengewicht
- 45: Zugfeder
- 46: Transportriemen
- 47: Riemenscheibe
- 48: Riemenscheibe
- 49: Obertrum
- 50: Mitnehmerelement
- 51: Förderfläche
- 52: Ware
- 60: Schiene
- 61: Obertrum
- 62: Untertrum
- 63: Hauptantriebswelle
- 64: Kupplung
- 65: Nocken
- 66: Stirnradgetriebe
- 66a: Zahnrad
- 66b: Zahnrad
- 67: Welle
- 68: Gegendruckrolle
- 69: Zapfen
- 70: Buchse
- 71: Mantelfläche
- 72: Walze
- 73: Zugfeder

- α: Neigungswinkel

## Patentansprüche

1. Kommissionierlager für Stückgüter, bestehend aus
- einem Lagerbereich (1) mit einer Vielzahl sich darin parallel zueinander erstreckender Lagergassen (7) für die zu kommissionierenden Waren, wobei jede der Lagergassen (7) aus einer Rollenbahn (8) besteht, die in Transportrichtung abschüssig geneigt ist,
- einem Bestückungsbereich (2) am einen Ende der Lagergassen (7) mit einer sich quer zu den Lagergassen (7) erstreckenden Transportbahn (6) für neu einzulagernde Waren sowie einem Querförderer (11) zur Einlagerung neuer Waren in die Lagergassen (7) und
- einem Kommissioinierbereich (3) am anderen Ende der Lagergassen (7) mit Entnahmevorrichtungen (4) zur rechnergesteuerten Überführung einzelner Waren aus den Lagergassen (7) auf nachgeordnete Fördereinrichtungen, wobei jede Lagergasse mit einer eigenen, unabhängig von den übrigen Entnahmevorrichtungen betätigbaren Entnahmevorrichtung (4) versehen ist,
**dadurch gekennzeichnet,**
**dass** der Querförderer (11) als für eine Mehrzahl von Lagergassen (7) gemeinsamer Querförderer (11) in Längsrichtung entlang der Transportbahn (6) verfahrbar und in eine Position vor jeder dieser Lagergassen (7) einstellbar ist, und dass die geneigten Rollenbahnen (8) der Lagergassen (7) aus Rollen oder Walzen bestehen, die über ein gemeinsames Antriebsmittel in Drehung versetzbar sind.

2. Kommissionierlager nach Anspruch 1, **dadurch gekennzeichnet, daß** das gemeinsame Antriebsmittel ein endloser Antriebsriemen (16) ist.

3. Kommissionierlager nach Anspruch 2, **dadurch gekennzeichnet, daß** der Antriebsriemen (16) zwischen den Rollen bzw. Walzen (15) und einem Druckwiderlager (23; 68) hindurchgeführt ist.

4. Kommissionienager nach Anspruch 3, **gekennzeichnet durch** antriebslose Gegendruckrollen (68) als Druckwiderlager.

5. Kommissionierlager nach Anspruch 2 oder 3, **dadurch gekennzeichnet, daß** der Antriebsriemen (16) ein vorzugsweise als Buchse (70) gestaltetes Element antreibt, welches drehbar auf der Rolle bzw. Walze (15) gelagert ist.

6. Kommissionierlager nach Anspruch 5, **dadurch gekennzeichnet, daß** der Reibwert zwischen Rolle bzw. Walze (15) und dem Element geringer ist, als der Reibwert zwischen dem Element und dem Antriebsriemen (16).

7. Kommissionierlager nach einem der vorangehenden Ansprüche, **dadurch gekennzeichnet, daß** die Umlenkung des als Antriebsmittel dienenden Antriebsriemens (16) über Umlenkrollen (17, 18) erfolgt, die sich in oder unter dem Bestückungsbereich (2) und/oder dem Kommissionierbereich (3) befinden.

8. Kommissionierlager nach Anspruch 7, **dadurch gekennzeichnet, daß** die unter dem Kommissionierbereich (3) angeordnete Umlenkrolle (17) angetrieben ist.

9. Kommissionierlager nach einem der vorangehenden Ansprüche, **dadurch gekennzeichnet, daß** die Bewegung des Antriebsmittels der Rollenbahn (8) aus der Drehbewegung einer gemeinsamen Hauptantriebswelle (63) abgeleitet wird, die außerdem mehrere Entnahmevorrichtungen (4) antreibt.

10. Kommissionienagec nach Anspruch 1, **dadurch gekennzeichnet, daß** der Neigungswinkel (α) der Rollenbahn 2,5 bis 6 %, vorzugsweise 3 bis 5,5 % beträgt.

11. Kommissionierlager nach einem der vorangehenden Ansprüche, **dadurch gekennzeichnet, daß** sich entlang der Entnahmevorrichtungen (4) und quer zu den Lagergassen eine vorzugsweise kontinuierlich angetriebene Transportbahn (5) für die mit Hilfe der Entnahmevorrichtungen (4) entnommenen Waren erstreckt, und daß Bestandteile dieser Entnahmevorrichtungen (4) ein in den Förderweg der Rollenbahn (8) ragendes, betätigbares Rückhalteelement (31) sowie ein in Förderrichtung hinter dem Rückhalteelement (31) angeordneter Horizontalförderer (30) sind, dessen Fördergeschwindigkeit größer als die Fördergeschwindigkeit der Rollenbahn (8) ist.

12. Kommissionierlager nach Anspruch 11, **dadurch gekennzeichnet, daß** die Fördergeschwindigkeit des Horizontalförderers (30) mindestens 25 % größer als die Fördergeschwindigkeit der Rollenbahn (8) ist.

13. Kommissionierlager nach Anspruch 11 oder Anspruch 12, **dadurch gekennzeichnet, daß** der Antrieb einer Mehrzahl der Horizontalförderer (30) mittels einer gemeinsamen Antriebswelle erfolgt, die sich quer zu den Lagergassen (7) erstreckt.

14. Kommissionierlager nach Anspruch 13, **gekennzeichnet durch** eine gesteuert schaltbare Kupplung (64) zum zeitlich begrenzten Ableiten einer den Förderweg freigebenden Entsperrbewegung des Rückhalteelements (31) aus der Drehbewegung der gemeinsamen Antriebswelle, wobei die Kupplung (64) jeder Entnahmevorrichtung (4) getrennt von den übrigen Kupplungen (64) ansteuerbar ist.

15. Kommissionierlager nach Anspruch 14, **dadurch gekennzeichnet, daß** das Rückhalteelement (31) mit Rückstellmitteln (73) versehen ist, die das Rückhalteelement (31) mit einer Rückstellkraft in Richtung seiner Sperrbewegung beaufschlagen, wobei die Rückstellkraft geringer ist als die Gewichtskraft der in der Lagergasse (7) lagernden Waren/Warengebinde (39, 39a).

16. Kommissionierlager nach einem der Ansprüche 14 oder 15, **dadurch gekennzeichnet, daß** die Kupplung (64) die gemeinsame Antriebswelle ringförmig umschließt, und daß das Abtriebsteil der Kupplung ein Nocken (40) ist, der bei Ansteuerung der Kupplung gegen das Rückhalteelement (31) schwenkt.

17. Kommissionierlager nach Anspruch 16, **dadurch gekennzeichnet, daß** der Nocken (40) auf einer Achse gelagert ist, die zu einer Welle (63) koaxial ist, welche den Horizontalförderer (30) antreibt.

18. Kommissionierlager nach einem der Ansprüche 11 bis 17, **dadurch gekennzeichnet, daß** sich der Horizontalförderer (30) aus einer angetriebenen ersten Riemenscheibe (32), mindestens einer weiteren, mitlaufenden Riemenscheibe (33) sowie einem über die Riemenscheiben (32, 33) geführten, endlosen Riemen (34) zusammensetzt, wobei die angetriebene Riemenscheibe (32) das vordere Ende und die mitlaufende Riemenscheibe (33) das hintere Ende des Horizontalförderers (30) definiert.

19. Kommissionierlager nach Anspruch 18, **dadurch gekennzeichnet, daß** die erste Riemenscheibe (32) auf einer Antriebswelle (67) sitzt, und daß die Antriebswelle (67) über ein zwischengeschaltetes Getriebe (66) in dauernder Drehverbindung mit einer mehrere Rollenbahnen (8) antreibenden Hauptantriebswelle (63) steht.

20. Kommissionierlager, nach Anspruch 1, **dadurch gekennzeichnet, daß** der Querförderer (11) mit Riemenscheiben (47, 48) versehen ist, über die ein endloser Antriebsriemen (46) oder eine Antriebskette geführt ist, und daß an dem Antriebsriemen (46) bzw. der Antriebskette zwei Mitnehmerelemente (50) für die Ware (52) angeordnet sind.

## Claims

1. Picking store for piece goods, consisting of
- a storage region (1) with a plurality of storage aisles (7) extending parallel to one another therein for the goods which are to be picked, wherein each of the storage aisles (7) consists of a roller system (8) which is steeply inclined in the transport direction,
- a loading region (2) at one end of the storage aisles (7), with a transport system (6) extending transversely to the storage aisles (7) for goods which are to be newly stored and also a transverse conveyor (11) for storing new goods in the storage aisles (7), and
- a picking region (3) at the other end of the storage aisles (7), with removal devices (4) for the computer-controlled transfer of individual goods from the storage aisles (7) to downstream conveyor devices, wherein each storage aisle is provided with its own removal device (4) which can be actuated independently of the other removal devices,
**characterised**
**in that** the transverse conveyor (11), as a common transverse conveyor (11) for a plurality of storage aisles (7), can be displaced in the longitudinal direction along the transport system (6) and can be moved into a position in front of each of these storage aisles (7), and in that the inclined roller systems (8) of the storage aisles (7) consist of rollers which can be set in rotation via a common drive means.

2. Picking store according to Claim 1, **characterised in that** the common drive means is an endless drive belt (16).

3. Picking store according to Claim 2, **characterised in that** the drive belt (16) is guided through between the rollers (15) and a pressure-exerting abutment (23; 68).

4. Picking store according to Claim 3, **characterised by** non-driven counterpressure rollers (68) as the pressure-exerting abutment.

5. Picking store according to Claim 2 or 3, **characterised in that** the drive belt (16) drives an element which is preferably designed as a bushing (70) and which is rotatably mounted on the roller (15).

6. Picking store according to Claim 5, **characterised in that** the friction value between the roller (15) and the element is lower than the friction value between the element and the drive belt (16).

7. Picking store according to one of the preceding claims, **characterised in that** the drive belt (16) serving as drive means is deflected over deflection rollers (17, 18) which are located in or below the loading region (2) and/or the picking region (3).

8. Picking store according to Claim 7, **characterised in that** the deflection roller (17) arranged below the picking region (3) is driven.

9. Picking store according to one of the preceding claims, **characterised in that** the movement of the drive means of the roller system (8) is derived from the rotational movement of a common main drive shaft (63) which moreover drives a number of removal devices (4).

10. Picking store according to Claim 1, **characterised in that** the angle of inclination (α) of the roller system is 2.5 to 6%, preferably 3 to 5.5%.

11. Picking store according to one of the preceding claims, **characterised in that** a preferably continuously driven transport system (5) for the goods removed by the removal devices (4) extends along the removal devices (4) and transversely to the storage aisles, and **in that** constituent parts of these removal devices (4) include a restraining element (31) which can be actuated and projects into the conveying path of the roller system (8), and a horizontal conveyor (30) which is arranged behind the restraining element (31) in the conveying direction, the conveying speed of which horizontal conveyor is greater than the conveying speed of the roller system (8).

12. Picking store according to Claim 11, **characterised in that** the conveying speed of the horizontal conveyor (30) is at least 25% greater than the conveying speed of the roller system (8).

13. Picking store according to Claim 11 or Claim 12, **characterised in that** a plurality of the horizontal conveyors (30) are driven by means of a common drive shaft which extends transversely to the storage aisles (7).

14. Picking store according to Claim 13, **characterised by** a coupling (64) which can be switched in a controlled manner in order to derive from the rotational movement of the common drive shaft, for a limited time, an unblocking movement of the restraining element (31) which frees the conveying path, wherein the coupling (64) of each removal device (4) can be actuated separately from the other couplings (64).

15. Picking store according to Claim 14, **characterised in that** the restraining element (31) is provided with restoring means (73) which act on the restraining element (31) with a restoring force in the direction of its blocking movement, wherein the restoring force is smaller than the weight force of the goods/goods containers (39, 39a) stored in the storage aisle (7).

16. Picking store according to one of Claims 14 or 15, **characterised in that** the coupling (64) surrounds the common drive shaft in an annular manner, and **in that** the driven part of the coupling is a cam (40) which pivots against the restraining element (31) when the coupling is actuated.

17. Picking store according to Claim 16, **characterised in that** the cam (40) is mounted on an axle which is coaxial to a shaft (63) which drives the horizontal conveyor (30).

18. Picking store according to one of Claims 11 to 17, **characterised in that** the horizontal conveyor (30) is composed of a driven first belt pulley (32), at least one further belt pulley (33) which runs along therewith, and also an endless belt (34) which is guided over the belt pulleys (32, 33), wherein the driven belt pulley (32) defines the front end and the belt pulley (33) which runs along therewith defines the rear end of the horizontal conveyor (30).

19. Picking store according to Claim 18, **characterised in that** the first belt pulley (32) is seated on a drive shaft (67), and **in that** the drive shaft (67), via a gear mechanism (66) connected therebetween, is in permanent rotational connection with a main drive shaft (63) which drives a number of roller systems (8).

20. Picking store according to Claim 1, **characterised in that** the transverse conveyor (11) is provided with belt pulleys (47, 48), over which an endless drive belt (46) or a drive chain is guided, and **in that** two carry-along elements (50) for the goods (52) are arranged on the drive belt (46) or drive chain.

## Revendications

1. Ensemble de préparation et de rassemblement de marchandises de détail comprenant :
(7) - une zone de stockage (1) avec une pluralité de voies de stockage s'étendant dans celle-ci parallèlement les unes par rapport aux autres destinées à des marchandises de détail à préparer et rassembler, chacune des voies de stockage (7) étant constituée d'un chemin de roulement (8), qui est incliné avec une déclivité dans le sens du transport,
- une zone de chargement de marchandises (2) à une extrémité des voies de stockage (7) avec un chemin de transport (6) s'étendant transversalement par rapport aux voies de stockage (7) destiné à recevoir de nouvelles marchandises de détail à stocker ainsi qu'un transporteur transversal (11) destiné à ranger les nouvelles marchandises dans les voies de stockage (7) et
- une zone de préparation et de rassemblement des marchandises de détail (3) à l'autre extrémité des voies de stockage (7) avec des dispositifs de prélèvement (4) pour le transfert commandé par un calculateur de marchandises individuelles depuis les voies de stockage (7) sur des dispositifs transporteurs disposés les uns après les autres, chaque voie de stockage étant pourvue d'un dispositif de prélèvement (4) qui lui est propre, actionnable, indépendamment des autres dispositifs de prélèvement,
**caractérisé en ce que**,
le transporteur transversal (11) en tant que transporteur transversal (11) commun à une pluralité de voies de stockage (7) peut être avancé dans une direction longitudinale le long de la voie de transport (6) et peut être réglé dans une position en amont de chacune des voies de stockage (7), et **en ce que** les chemins de roulement présentant une déclivité (8) des voies de stockage (7) comprennent des rouleaux ou des cylindres, qui peuvent être déplacés en rotation par l'intermédiaire d'un moyen d'entraînement commun.

2. Ensemble de préparation et de rassemblement de marchandises de détail selon la revendication 1, **caractérisé en ce que** le moyen d'entraînement commun est une courroie d'entraînement à voie sans fin (16).

3. Ensemble de préparation et de rassemblement de marchandises de détail selon la revendication 2, **caractérisé en ce que** la courroie d'entraînement (16) est conduite entre les rouleaux ou les cylindres (15) et un organe de contre-pression (23 ; 68).

4. Ensemble de préparation et de rassemblement de marchandises de détail selon la revendication 3, **caractérisé par** des rouleaux de contre-pression sans entraînement (68) en tant qu'organe de contre-pression.

5. Ensemble de préparation et de rassemblement de marchandises de détail selon la revendication 2 ou 3, **caractérisé en ce que** la courroie d'entraînement (16) entraîne un élément réalisé de préférence sous forme d'un manchon (70), lequel est monté en rotation sur le rouleau ou le cylindre (15).

6. Ensemble de préparation et de rassemblement de marchandises de détail selon la revendication 5, **caractérisé en ce que** le coefficient de frottement entre le rouleau ou le cylindre (15) et l'élément est inférieur au coefficient de frottement entre l'élément et la courroie d'entraînement (16).

7. Ensemble de préparation et de rassemblement de marchandises de détail selon l'une quelconque des revendications précédentes, **caractérisé en ce que** le changement de sens de la courroie d'entraînement (16) servant en tant que moyen d'entraînement est effectué par l'intermédiaire de rouleaux de retournement (17, 18), qui se situent dans ou au-dessous de la zone de chargement des marchandises (2) et/ou de la zone de préparation et de rassemblement des marchandises de détail (3).

8. Ensemble de préparation et de rassemblement de marchandises de détail selon la revendication 7, **caractérisé en ce que** le rouleau de retournement (17) disposé au-dessous de la zone de préparation et de rassemblement des marchandises de détail (3) est entraîné.

9. Ensemble de préparation et de rassemblement de marchandises de détail selon l'une quelconque des revendications précédentes, **caractérisé en ce que** le mouvement des moyens d'entraînement du chemin de roulement (8) est induit par le mouvement en rotation d'un arbre d'entraînement principal commun (63) qui entraîne par ailleurs plusieurs dispositifs de prélèvement (4).

10. Ensemble de préparation et de rassemblement de marchandises de détail selon la revendication 1, **caractérisé en ce que** l'angle d'inclinaison (α) du chemin de roulement a une déclivité de 2,5 à 6 %, de préférence 3 à 5,5 %.

11. Ensemble de préparation et de rassemblement de marchandises de détail selon l'une quelconque des revendications précédentes, **caractérisé en ce qu'**un chemin de transport entraîné de préférence en mode continu (5), destiné aux marchandises prélevées à l'aide des dispositifs de prélèvement (4) s'étend le long des dispositifs de prélèvement (4) et transversalement aux voies de stockage et **en ce que** des éléments constituants de ces dispositifs de prélèvement (4) sont un élément de retenue (31) actionnable, faisant saillie dans le trajet d'avancée du chemin de roulement (8) ainsi qu'un convoyeur horizontal (30) disposé derrière l'élément de retenue (31) dans le sens du convoyage, dont la vitesse de transport est supérieure à la vitesse de transport du chemin de roulement (8).

12. Ensemble de préparation et de rassemblement de marchandises de détail selon la revendication 11, **caractérisé en ce que** la vitesse de transport du convoyeur horizontal (30) est supérieure d'au moins 25 % à la vitesse de transport du chemin de roulement (8).

13. Ensemble de préparation et de rassemblement de marchandises de détail selon la revendication 11 ou la revendication 12, **caractérisé en ce que** l'entraînement d'une pluralité de convoyeurs horizontaux (30) s'effectue au moyen d'un arbre d'entraînement commun, qui s'étend transversalement par rapport aux voies de stockage (7).

14. Ensemble de préparation et de rassemblement de marchandises de détail selon la revendication 13, **caractérisé par** un embrayage à transmission de mouvement commandé (64) destiné à dériver de façon limitée dans le temps un mouvement de déblocage libérant le chemin de convoyage de l'élément de retenue (31) sur la base de la rotation de l'arbre d'entraînement commun, l'embrayage (64) de chaque dispositif de prélèvement (4) pouvant être commandé de façon séparée des autres embrayages (64).

15. Ensemble de préparation et de rassemblement de marchandises de détail selon la revendication 14, **caractérisé en ce que** le moyen de retenue (31) est pourvu de moyens de rappel (73) qui sollicitent l'élément de retenue (31) avec une force de rappel dans la direction de son mouvement d'arrêt, la force de rappel étant inférieure au poids des marchandises ou empaquetages de marchandises (39, 39a) rangés dans la voie de stockage (7).

16. Ensemble de préparation et de rassemblement de marchandises de détail selon l'une quelconque des revendications 14 ou 15, **caractérisé en ce que** l'embrayage (64) entoure l'arbre d'entraînement commun périphériquement et **en ce que** la partie motrice de l'embrayage est une came (40) qui bascule contre l'élément de retenue (31) sur la commande de l'embrayage.

17. Ensemble de préparation et de rassemblement de marchandises de détail selon la revendication 16, **caractérisé en ce que** la came (40) est située sur un axe qui est coaxial par rapport à un arbre (63) qui entraîne le convoyeur horizontal (30).

18. Ensemble de préparation et de rassemblement de marchandises de détail selon l'une quelconque des revendications 11 à 17, **caractérisé en ce que** le convoyeur horizontal (30) est composé d'un premier disque de poulie asservi (32), d'au moins un autre disque de poulie rotatif (33) ainsi que d'une courroie sans fin (34) amenée au-dessus des disques de poulie (32, 33), le disque de poulie asservi (32) définissant l'extrémité avant et le disque de poulie tournant (33) définissant l'extrémité arrière du convoyeur horizontal (30).

19. Ensemble de préparation et de rassemblement de marchandises de détail selon la revendication 18, **caractérisé en ce que** le premier disque de poulie (32) repose sur un arbre d'entraînement (67) et que l'arbre d'entraînement (67) se trouve au-dessus d'un engrenage intercalé (66) dans une liaison tournante d'une certaine amplitude avec un arbre d'entraînement principal (63) entraînant plusieurs chemins de roulement (8).

20. Ensemble de préparation et de rassemblement de marchandises de détail selon la revendication 1, **caractérisé en ce que** le convoyeur transversal (11) est pourvu de disques de poulie (47, 48), au-dessus desquels est amenée une courroie d'entraînement à voie sans fin (46) ou une chaîne d'entraînement et **en ce que** deux éléments preneurs (50) pour prendre les marchandises (52) sont disposés sur la courroie d'entraînement (46) ou la chaîne d'entraînement.
